# EUROPEAN PATENT SPECIFICATION

(11) **EP 2 143 538 B1**
(45) Date of publication and mention of the grant of the patent: **14.09.2011**
(21) Application number: 08425476.2
(22) Date of filing: 10.07.2008
(51) Int. Cl.: B29B 7/18, B29B 7/28, H02P 6/08

(54) **Polymeric material mixer**
Polymermaterialmischer
Mélangeur pour matériau polymérique

(43) Date of publication of application: 13.01.2010
(73) Proprietor: Ansaldo Sistemi Industriali S.p.A., 20126 Milano MI (IT)
(72) Inventor: Crespi, Sandro, 21052 Busto Arsizio (Varese) (IT)
(74) Representative: Bonvicini, Davide

(56) References cited:
- EP-A1- 0 244 121
- EP-A2- 0 172 726
- DE-A1- 19 616 196
- GB-A- 2 196 547
- JP-A- 61 209 337
- US-A1- 2007 109 911
- Frank J. Bartos, P.E.: "Brushless PM Torque Motors" Control Engineering 6 January 2007 (2007-01-06), XP002533843 Retrieved from the Internet: URL:http://www.controleng.com/article/CA64 49174.html> [retrieved on 2009-06-24]
- "OHNE GETRIEBE" PLASTVERARBEITER, HUETHIG GMBH, HEIDELBERG, DE, vol. 53, no. 9, 1 September 2002 (2002-09-01), page 84/85, XP001116280 ISSN: 0032-1338

## Description

The present invention relates to a polymeric material mixer as defined in the preamble of claim 1.

Mixers are known in the art and are used for mixing polymeric materials, preferably elastomers, to make compounds for use in the fabrication of various products, such as tire compounds.

As used herein and in the annexed claims, the term "mixing point" is intended to indicate the last step of the mixing process in which the polymeric material has reached the desired rheological properties, and particularly a preset viscosity value, wherefore it is ready for making such products.

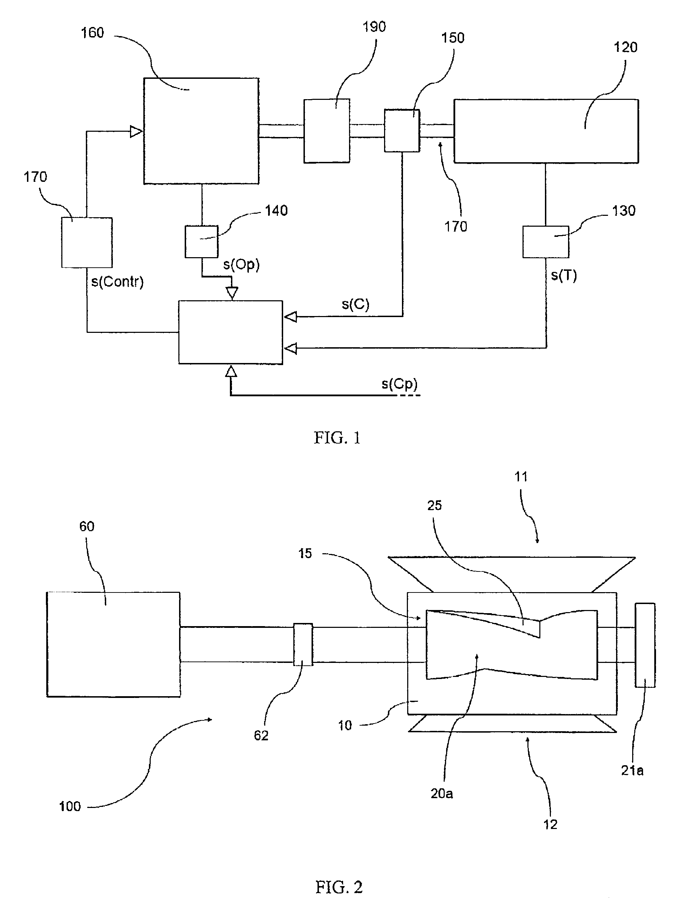

Referring to Figure 1, a prior art polymeric material mixer is shown as an example. Such mixer comprises a mixing chamber 110 having an inlet area and an outlet area for the polymeric material, and defining a cavity extending between the inlet area and the outlet area.

The polymeric material is mixed by two mixing rotors 120 which are rotatably mounted in the cavity of the mixing chamber 110.

The mixer further includes a motor 160 having a drive shaft 161 coupled to the mixing rotors via a gear reduction assembly 190 and receiving power from an inverter 170 that generates a power supply signal to control the rotation speed of the drive shaft 161.

The gear reduction assembly 190, which includes appropriate gears, adjusts the rotation speeds of the mixing rotors to sufficiently low values, for adequate mixing of the polymers introduced in the mixing chamber. It shall be noted that the motors used in such applications reach rotation speeds of the order of thousands of revolutions per minute, whereas the mixing rotors have to rotate at speeds of the order of a few tens of revolutions per minute, for the polymeric material to be effectively mixed without losing its properties.

In order to control the mixing process, the mixer has temperature sensors 130 associated with the mixing chamber 110, which are adapted to generate temperature signals s(T) indicative of the temperature value of the polymeric material, and a plurality of sensors 140 in signal communication with the motor 160, which are adapted to generate a plurality of operating signals s(Op) indicative of the voltage and current values of the power supply signal from the inverter 107 and the rotation speed of the drive shaft 161.

The mixing point can be determined during mixing by continuously monitoring the rheological properties of the polymeric material, particularly viscosity. Since the viscosity of the polymeric material is proportional to the torque, such viscosity can be determined by measuring the torque of the mixing rotors.

For this purpose, the mixer has measuring means 150 associated with the gear reduction assembly 190, which are adapted to generate a torque signal s(C) indicative of the torque value of the drive shaft 161.

The mixer also includes processing means 180 which are adapted to receive a predetermined torque signal s (Cp) indicative of and proportional to a preset viscosity value of the polymeric material.

The processing means 180 are in signal communication with the sensors 130, 140, 150 and with the power supply means 170 and process the temperature signals s(T), the plurality of operating signals s(Op), the predetermined torque signal s (Cp) indicative of the preset viscosity value, and the torque signal s(C) to generate a control signal s(Contr) for controlling the inverter 170.

Nonetheless, the above mixer does not allow accurate control of the polymeric material mixing process.

Particularly, errors may occur in measuring the torque of the mixing rotors, due to the presence of the gear reduction assembly 190. Such torque is influenced by the various reduction stages of the gears in the gear reduction assembly 190, wherefore it cannot be accurately determined.

Inaccurate torque measurements inevitably lead to inaccurate viscosity values, wherefore such measuring errors cause the mixing process to be controlled in an approximate and unreliable manner.

US 2007/109911 discloses an apparatus and method for melting polymer. The apparatus includes a housing, two or more rotatable members, where each rotatable member having a shaft coupled thereto. The apparatus also includes a motor having a drive shaft directly coupled to the shaft of the rotatable members such that the rotatable members rotate at a speed of the motor drive shaft.
EP-A-0244 121 discloses a polymeric material mixer in accordance with the preamble of claim 1, and a process for mixing a polymer composition using an internal mixer having rotors rotatably mounted in a chamber and temperature control means for the mixer. Materials are introduced into the chamber and, after introduction of all the materials, at least three mixing variables e.g. temperature, time and energy, indicating mixing quality are monitored and control variables e.g. rotor speed adjusted dependent on the monitored mixing variables to achieve previously defined targets.

In view of the above, there arises the need of providing a reliable polymeric material mixer affording an effective and accurate control of the polymeric material mixing process.

Therefore, the object of the present invention is to provide a polymeric material mixer that has such structural and functional features as to fulfill the above need, while obviating at least part of the drawbacks of prior art.

This object is fulfilled by a polymeric material mixer as defined in claim 1.

Further features and advantages of the polymeric material mixer of the invention will be apparent from the following description of one preferred embodiment

thereof, which is given by way of illustration and without limitation with reference to the accompanying figures, in which:
- Figure 1 is a diagrammatic view of a prior art mixer;
- Figure 2 is a sectional side view of a mixer of the present invention;
- Figure 3 is a top view of the mixer of Figure 2;
- Figure 4 is a block diagram of the mixer of Figure 2;

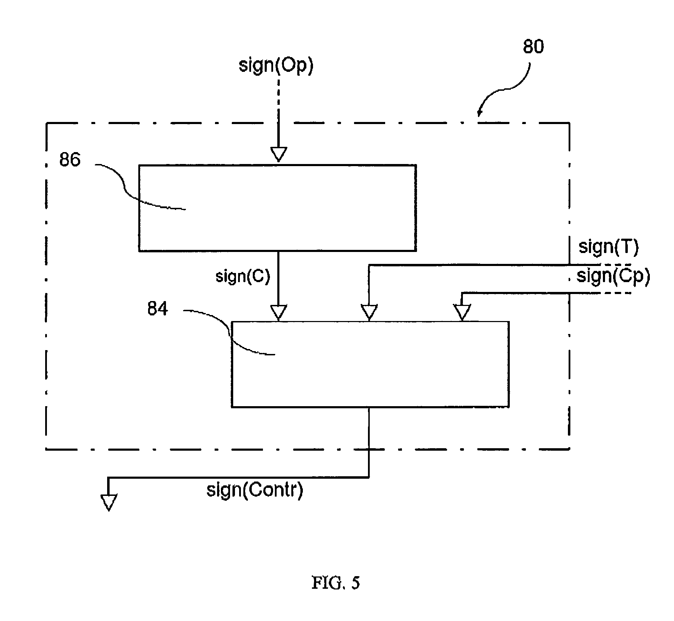

- Figure 5 is a block diagram of the processing means of the mixer of Figure 2.

Referring to the annexed figures, numeral 100 generally designates a polymeric material mixer according to the present invention.

The mixer 100 comprises a mixing chamber 10 having an inlet area 11 and an outlet area 12 for the polymeric material.

As shown in Figure 2, the mixing chamber 10 defines a cavity 15 that extends between the inlet area 11 and the outlet area 12.

The mixer 100 has first 20a and second 20b mixing rotors rotatably mounted in the cavity 15.

The mixer 100 also has a power-driven unit 60 associated with one end of one of the mixing rotors 20a, 20b, and adapted to rotate the mixing rotors 20a, 20b, and power supply means adapted to generate a power supply signal sign (A) for supplying power to the power-driven unit 60.

For example, the power supply means may include electrical apparatus for supplying power to the power driven unit, such as inverters, rectifiers or current and/or voltage converters.

The power-driven unit 60 comprises a permanent magnet motor.

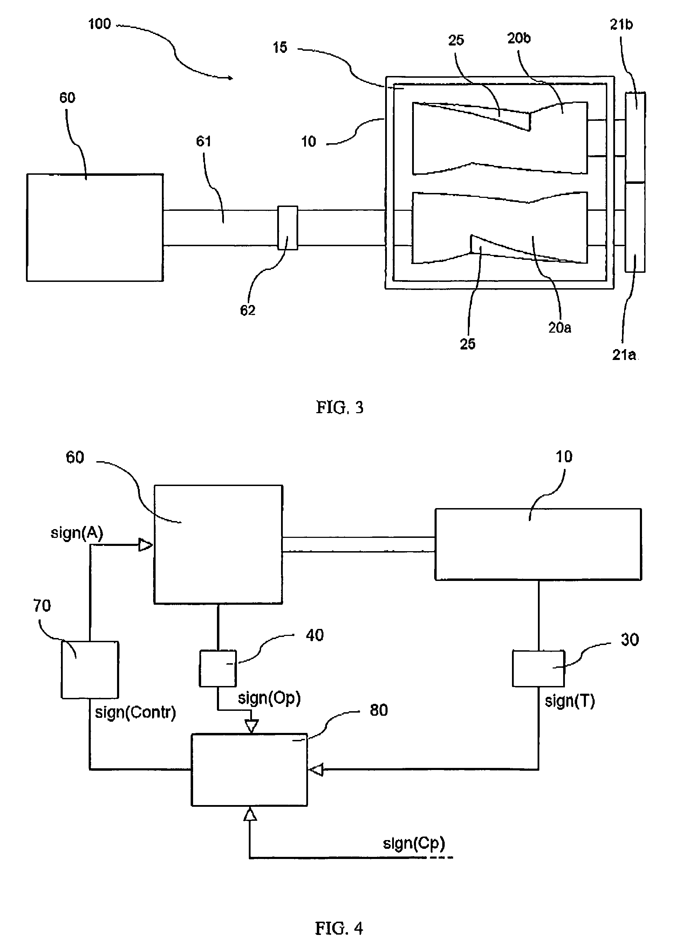

In the embodiment as shown in Figure 3, the permanent magnet motor has a drive shaft 60 coupled to the first mixing rotor 20a so that the rotation speed of the drive shaft 61 corresponds to the rotation speed of the first mixing rotor 20a.

In accordance with the present invention the drive shaft 61 is coupled to the first mixing rotor 20a in a direct manner. Thus, the torque value of the drive shaft 61 is equal to the torque value of the first mixing rotor 20a.

The mixing rotors 20a,20b are integrally associated to first 21a and second 21b ring gears respectively.

The first 21a and second 21b ring gears are in meshed relation and configured for the rotation of the first mixing rotor 20a to be transmitted to the second mixing rotor 20b.

In a first embodiment, the first 21a and second 21b ring gears have radius of equal length. Thus, the rotation speed of the drive shaft 61 will correspond to the rotation speed of the first 20a and the second mixing rotor 20b.

In a second embodiment, the first 21a and second 21b ring gears have radius of different lengths. In this embodiment, the rotation speed of the first mixing rotor 20a is different from the rotation speed of the second mixing rotor 20b, wherefore the torques of the mixing rotors 20a, 20b are proportionally distributed.

In one embodiment, a coupling joint 62 is interposed between the first mixing rotor 20a and the drive shaft 61.

Here again, the drive shaft 61 is deemed to be coupled to the first mixing rotor 20a in a direct manner, because the interposed coupling joint maintains the rotation speed of the drive shaft 61 equal to the rotation speed of the first mixing rotor 20a.

It shall be noted that, in the mixer 100, the polymeric material is introduced in the mixing chamber 10 through the inlet area 11, mixed in the mixing area, and delivered trough the outlet area 12, as the mixing point is reached.

For this purpose, the mixing rotors 20a, 20b have a polymeric material mixing portion. Particularly, the mixing portion includes at least two mixing paddles 25 disposed radial to the mixing rotor 20a, 20b.

In a further embodiment, the mixing rotors 20a, 20b have a polymeric material feeding portion.

The feeding portion includes a worm adapted for feeding the polymeric material into said cavity 15. Particularly, the direction of feed of the polymeric material is substantially perpendicular to the direction of extension of the mixing rotor 20a, 20b.

During the mixing process, the rheological properties of the polymeric material, such as temperature and viscosity, are subjected to abrupt changes.

Accurate determination of the mixing point and hence adequate control of the mixing process requires as accurate information as possible about the rheological properties of the polymeric material.

For this purpose, the mixer 100 has first measuring means 30 associated with the mixing chamber 10, which are adapted to generate at least one temperature signal sign(T) indicative of the temperature value of the polymeric material.

For example, the first measuring means 30 may include a thermocouple, a thermistor, a thermal resistor or any other temperature sensor for sensing the temperature of the polymeric material.

Also, the mixer 100 has second measuring means 40 in signal communication with the permanent magnet motor.

The second measuring means 40 are adapted to generate a plurality of operating signals sign(Op) indicative of the voltage and current values of the power supply signal sign(A) and the rotation speed of the drive shaft 61.

For example, the second measuring means 40 include an encoder for measuring a signal indicative of the rotation speed of the drive shaft 61 and at least one of a voltmeter for measuring a signal indicative of the voltage value of the power supply means and an ammeter for measuring a signal indicative of the current value of the power supply means .

In order to receive and process said plurality of signals, the mixer 100 has processing means 80 in signal communication with the first 30 and second 40 measuring means and with the power supply means.

These processing means 80 are adapted to receive a predetermined torque signal sign(Cp) indicative of and proportional to a preset viscosity value of the polymeric material and to process the temperature signal sign(T), the plurality of operating signals sign(Op) and the predetermined torque signal sign(Cp) to generate a control signal sign(Contr) for controlling the power supply means.

This allows accurate control of the polymeric material mixing process in the mixing chamber 10 for maximum accuracy and reliability of such mixing process. Thus, the direct coupling arrangement between the drive shaft 61 and the first mixing rotor 20a, which causes the torque value of the first mixing rotor 20a to be equal to the torque value of the drive shaft 61, affords accurate and efficient control of the power supply means.

According to one embodiment, the processing means 80 include a computing unit 84 which is adapted to receive the plurality of operating signals sign(Op) to process such signals and generate a torque signal sign(C) indicative of the torque value of the drive shaft 61.

The processing means 80 include a processing unit 86 in signal communication with the computing unit 84 and adapted to receive the temperature signal sign(T), the predetermined torque signal sign(Cp) and the torque signal, sign (C).

Advantageously, the processing unit 86 is adapted to process these signals and generate the control signal sign(Contr) for controlling the power supply means. The control signal sign (Contr) includes a voltage control signal or a current control signal.

It will be appreciated from the above description that the mixer of the present invention fulfills the needs and obviates prior art drawbacks as set out in the introduction of this disclosure.

Those skilled in the art will obviously appreciate that a number of changes and variants may be made to the mixer of the invention as described hereinbefore to meet specific needs, without departure from the scope of the invention, as defined in the following claims.

For example, for an even more accurate control of the mixing process, the mixing chamber 10 may be equipped with a plurality of temperature sensors so that a plurality of signals indicative of the temperature value of the polymeric material may be transmitted to the processing means 80 via the first measuring means 30.

## Claims

1. A polymeric material mixer (100) comprising:
- a mixing chamber (10) having an inlet area (11) and an outlet area (12) for the polymeric material, said mixing chamber (10) defining a cavity (15) that extends between said inlet area (11) and said outlet area (12),
- first measuring means (30) associated with said mixing chamber (10), and adapted to generate at least one temperature signal (sign (T)) indicative of the temperature value of said polymeric material,
- first (20a) and second (20b) mixing rotors rotatably mounted in said cavity (15) and each comprising a first (21a) and a second ring gears (21b),
- a power-driven unit (60) associated with one end of said first mixing rotor (20a), and adapted to rotate said first mixing rotor (20a), said first (21a) and second (21b) ring gears being in meshed relation so that the rotation of the first mixing rotor (20a) is transmitted to the second mixing rotor (20b),
- power supply means for generating a power supply signal (sign (A)) to supply power to said power-driven unit (60),
**characterized in that**
- said power-driven unit (60) comprises a permanent magnet motor having a drive shaft (61) coupled to said first mixing rotor (20a) so that the rotation speed of the drive shaft (61) corresponds to the rotation speed of said first mixing rotor (20a),
- said mixer (100) comprising:
- second measuring means (40) in signal communication with said permanent magnet motor and adapted to generate a plurality of operating signals (sign(Op)) indicative of the voltage and current values of said power supply signal (sign (A)) and the rotation speed of said drive shaft (61),
- processing means (80) adapted to receive a predetermined torque signal (sign (Cp)) proportional to and indicative of a preset viscosity value of the polymeric material and in signal communication with the first (30) and second measuring means (40) and with said power supply means , said processing means (80) being adapted to process said at least one temperature signal (sign (T)), said plurality of operating signals (sign (Op)) and said predetermined torque signal (sign (Cp)) to generate a control signal (sign(Contr)) for controlling said power supply means (70) wherein said processing means (80) comprise:
- a computing unit (84) adapted to receive and process said plurality of operating signals (sign(Op)) to generate a torque signal (sign (C)) indicative of the torque value of said drive shaft (61), and
- a processing unit (86) in signal communication with said computing unit (84) and adapted to receive and process said temperature signal (Sign(T)), said predetermined torque signal (sign (Cp) and said torque signal (sign (C)) to generate said control signal (sign (Contr)) for controlling said power supply means (70).

2. A polymeric material mixer (100) as claimed in claim 1, wherein said drive shaft (61) is coupled with said first mixing rotor (20a) in a direct manner.

3. A polymeric material mixer (100) as claimed in claims 1 or 2, wherein said control signal (sign (Contr)) includes a voltage control signal or a current control signal.

4. A polymeric material mixer (100) as claimed in any one of claims 1 to 3, wherein said second measuring means (40) include an encoder for generating a signal indicative of the rotation speed of said drive shaft (61) and at least one of a voltmeter for generating a signal indicative of the voltage value of said power-driven unit (60) and an ammeter for generating a signal indicative of the current value of said power-driven unit (60).

5. A polymeric material mixer (100) as claimed in any one of the preceding claims 1 to 4, wherein the mixing rotors (20a, 20b) have a mixing portion for mixing said polymeric material.

6. A polymeric material mixer (100) as claimed in claim 5, wherein said mixing portion for mixing said polymeric material comprises at least two mixing paddles (25) disposed radial to said mixing rotor (20a, 20b).

7. A polymeric material mixer (100) as claimed in any one of the preceding claims 1 to 6, wherein said mixing rotors (20a, 20b) have a feeding portion for feeding said polymeric material.

8. A polymeric material mixer (100) as claimed in claim 7, wherein said feeding portion includes a worm for feeding the polymeric material into said cavity (15).

9. A polymeric material mixer (100) as claimed in claim 8, wherein the direction of feed of the polymeric material is substantially perpendicular to the direction of extension of said mixing rotor (20a, 20b).

## Patentansprüche

1. Mischer (100) für ein polymeres Material, umfassend:
- eine Mischkammer (10) mit einem Einlaßbereich (11) und einem Auslaßbereich(12) für das polymere Material, wobei die Mischkammer (10) einen Hohlraum (15) definiert, der sich zwischen dem Einlaßbereich (11) und dem Auslaßbereich (12) erstreckt,
- erste, der Mischkammer (10) zugeordnete Meßmittel (30), die geeignet sind, wenigstens ein den Temperaturwert des polymeren Materials kennzeichnendes Temperatursignal (sign(T)) zu erzeugen,
- erste (20a) und zweite (20b), in dem Hohlraum (15) drehbar montierte Mischrotoren, die jeweils ein erstes (21 a) und ein zweites (21 b) Zahnrad umfassen,
- eine einem Ende des ersten Mischrotors (20a) zugeordnete strombetriebene Einheit (60), die geeignet ist, den ersten Mischrotor (20a) zu drehen, wobei das erste (21 a) und das zweite (21 b) Zahnrad miteinander im Eingriff stehen, so daß die Drehung des ersten Mischrotors (20a) dem zweiten Mischrotor (20b) übertragen wird, und
- Energieversorgungsmittel zum Generieren eines Energieversorgungssignals (sign(A)), um die energieangetriebene Einheit (60) mit Energie zu versorgen,
**dadurch gekennzeichnet, daß**
- die strombetriebene Einheit (60) einen Permanentmagnetmotor mit einer mit dem ersten Mischrotor (20a) verbundenen Antriebswelle (61) umfaßt, so daß die Drehzahl der Drehwelle (61) der Drehzahl des ersten Mischrotors (20a) entspricht,
- wobei der Mischer (100) umfaßt:
- zweite Meßmittel (40), die in Signalverbindung mit dem Permanentmagnetmotor stehen und geeignet sind, eine Mehrzahl von Betriebssignalen (sign(Op)) zu generieren, die die Strom- und Spannungswerte des Energieversorgungssignals (sign(A)) und die Drehzahl der Drehwelle (61) kennzeichnen, und
- Verarbeitungsmittel (80), die zum Empfangen eines vorbestimmten Drehmomentsignals (sign(Cp)), das proportional einem und kennzeichnend eines vorbestimmten Viskositätswert des polymeren Materials ist, geeignet sind und in Signalverbindung mit den ersten (30) und den zweiten Meßmitteln (40) und mit den Energieversorgungsmitteln stehen, wobei die Verarbeitungseinheit (80) dazu geeignet ist, das wenigstens eine Temperatursignal (sign(T)), die Mehrzahl von Betriebssignalen (sign(Op)) und das vorbestimmte Drehmomentsignal (sign(Cp)) zu verarbeiten, um ein Steuersignal (sign(Contr)) zum Steuern der Energieversorgungsmittel 70) zu generieren, wobei die Verarbeitungsmittel (80) umfassen:
- eine Recheneinheit (84), die geeignet ist, die Mehrzahl von Betriebssignalen (sign(Op)) zu empfangen und zu verarbeiten, um ein Drehmomentsignal (sign(C)), das für den Drehmomentwert der Drehwelle (61) kennzeichnend ist, zu generieren, und
- eine Verarbeitungseinheit (86), die in Signalverbindung mit der Recheneinheit (84) steht und geeignet ist, das Temperatursignal (sign(T)), das vorbestimmte Drehmomentsignal (sign(Cp)) und das Drehmomentsignal (signC)) zu empfangen und zu verarbeiten, um das Steuersignal (sign(Contr)) zum Steuern der Energieversorgungsmittel (70) zu generieren.

2. Mischer (100) für ein polymeres Material nach Anspruch 1, wobei die Drehwelle (61) mit dem ersten Mischrotor (20a) direkt verbunden ist.

3. Mischer (100) für ein polymeres Material nach einem der Ansprüche 1 oder 2, wobei das Steuersignal (sign(Contr)) ein Spannungssteuersignal oder ein Stromsteuersignal umfaßt.

4. Mischer (100) für ein polymeres Material nach einem der Ansprüche 1 bis 3, wobei die zweiten Meßmittel (40) einen Meßgeber zum Generieren eines für die Drehzahl der Drehwelle (61) kennzeichnenden Signals und wenigstens ein Voltmeter zum Generieren eines für den Spannungswert der strombetriebene Einheit (60) kennzeichnenden Signals oder ein Amperemeter zum Generieren eines für den Stromwert der strombetriebene Einheit (60) kennzeichnenden Signals umfassen.

5. Mischer (100) für ein polymeres Material nach einem der Ansprüche 1 bis 4, wobei die Mischrotoren (20a, 20b) einen Mischabschnitt zum Mischen des polymeren Materials umfassen.

6. Mischer (100) für ein polymeres Material nach Anspruch 5, wobei der Mischabschnitt zum Mischen des polymeren Materials wenigstens zwei Mischschaufeln (25) umfaßt, die bezüglich des Mischrotors (20a, 20b) radial angeordnet sind.

7. Mischer (100) für ein polymeres Material nach einem der Ansprüche 1 bis 6, wobei die Mischrotoren (20a, 20b) einen Zufuhrabschnitt für die Zuführung des polymeren Materials aufweisen.

8. Mischer (100) für ein polymeres Material nach Anspruch 7, wobei der Zufuhrabschnitt eine Schnecke für die Zuführung des polymeren Materials in den Hohlraum (15) umfaßt.

9. Mischer (100) für ein polymeres Material nach Anspruch 8, wobei die Zufuhrrichtung des polymeren Materials im wesentlichen senkrecht zur Erstreckungsrichtung des Mischrotors (20a, 20b) steht.

## Revendications

1. Mélangeur de matériau polymère (100) comprenant :
- une chambre de mélange (10) comprenant une zone d'entrée (11) et une zone de sortie (12) pour le matériau polymère, ladite chambre de mélange (10) définissant une cavité (15) qui s'étend entre ladite zone d'entrée (11) et ladite zone de sortie (12),
- un premier moyen de mesure (30) en relation avec ladite chambre de mélange (10), et conçu pour générer au moins un signal de température (sign(T)) indiquant la valeur de température du matériau polymère,
- un premier (20a) et un second (20b) rotors de mélange montés rotatifs dans ladite cavité (15) et chacun comprenant une première (21 a) et une seconde (21 b) couronnes,
- une unité entraînée électriquement (60) en relation avec une extrémité dudit premier rotor de mélange (20a) et conçue pour faire tourner ledit premier rotor de mélange (20a), lesdites première (21 a) et seconde (21 b) couronnes étant en relation engrenée de sorte que la rotation du premier rotor de mélange (20a) soit transmise au second rotor de mélange (20b),
- un moyen d'alimentation électrique pour générer un signal d'alimentation électrique (sign(A)) afin d'alimenter ladite unité entraînée électriquement (60), **caractérisé en ce que**
- ladite unité entraînée électriquement (60) comprend un moteur magnétique permanent comprenant un arbre d'entraînement (61) couplé audit premier rotor de mélange (20a) de sorte que la vitesse de rotation de l'arbre d'entraînement (61) corresponde à la vitesse de rotation dudit premier rotor de mélange (20a),
- ledit mélangeur (100) comprenant :
- un second moyen de mesure (40) en communication de signal avec ledit moteur magnétique permanent et conçu pour générer une pluralité de signaux de fonctionnement (sign (Op)) indiquant les valeurs de voltage et de courant dudit signal d'alimentation électrique (sign(A)) et la vitesse de rotation dudit arbre d'entraînement (61),
- un moyen de traitement (80) conçu pour recevoir un signal de couple prédéterminé (sign(Cp)) proportionnel à et indiquant une valeur de viscosité préréglée du matériau polymère et en communication de signal avec les premier (30) et second (40) moyens de mesure et avec ledit moyen d'alimentation électrique, ledit moyen de traitement (80) étant conçu pour traiter ledit au moins un signal de température (sign(T)), ladite pluralité de signaux de fonctionnement (sign (Op)) et ledit signal de couple prédéterminé (sign (Cp)) pour générer un signal de contrôle (sign (Contr)) afin de contrôler ledit moyen d'alimentation électrique (70), ledit moyen de traitement (80) comprenant :
- une unité de calcul (84) conçue pour recevoir et traiter ladite pluralité de signaux de fonctionnement (sign (Op)) pour générer un signal de couple (sign(C)) indiquant la valeur de couple dudit arbre d'entraînement (61), et
- une unité de traitement (86) en communication de signal avec ladite unité de calcul (84) et conçue pour recevoir et traiter ledit signal de température (Sign(T)), ledit signal de couple prédéterminé (sign(Cp)) et ledit signal de couple (sign(C)) pour générer ledit signal de contrôle (sign(Contr)) afin de contrôler ledit moyen d'alimentation électrique (70).

2. Mélangeur de matériau polymère (100) selon la revendication 1, dans lequel ledit arbre d'entraînement (61) est couplé audit premier rotor de mélange (20a) de manière directe.

3. Mélangeur de matériau polymère (100) selon la revendication 1 ou 2, dans lequel ledit signal de contrôle (sign(Contr)) comprend un signal de contrôle du voltage ou un signal de contrôle du courant.

4. Mélangeur de matériau polymère (100) selon l'une quelconque des revendications 1 à 3, dans lequel ledit second moyen de mesure (40) comprend un dispositif de codage pour générer un signal indiquant la vitesse de rotation dudit arbre d'entraînement (61) et au moins un voltmètre pour générer un signal indiquant la valeur de voltage de ladite unité entraînée électriquement (60) ou un ampèremètre pour générer un signal indiquant la valeur de courant de ladite unité entraînée électriquement (60).

5. Mélangeur de matériau polymère (100) selon l'une quelconque des revendications 1 à 4, dans lequel les rotors de mélange (20a, 20b) comprennent une partie de mélange pour mélanger ledit matériau polymère.

6. Mélangeur de matériau polymère (100) selon la revendication 5, dans lequel ladite partie de mélange pour mélanger ledit matériau polymère comprend au moins deux pales de mélange (25) placées de manière radiale par rapport auxdits rotors de mélange (20a, 20b).

7. Mélangeur de matériau polymère (100) selon l'une quelconque des revendications 1 à 6, dans lequel lesdits rotors de mélange (20a, 20b) possèdent une partie d'alimentation pour alimenter ledit matériau polymère.

8. Mélangeur de matériau polymère (100) selon la revendication 7, dans lequel ladite partie d'alimentation comprend un serpentin pour alimenter le matériau polymère dans ladite cavité (15).

9. Mélangeur de matériau polymère (100) selon la revendication 8, dans lequel le sens de l'alimentation du matériau polymère est essentiellement perpendiculaire au sens d'extension desdits rotors de mélange (20a, 20b).
